# EUROPEAN PATENT APPLICATION

(11) **EP 2 890 039 A1**
(43) Date of publication of application: **01.07.2015**
(21) Application number: 13306890.8
(22) Date of filing: 30.12.2013
(51) Int. Cl.: H04L 9/00

(54) **Method to independently complete the personalization of a token**

(71) Applicant: Gemalto SA, 92190 Meudon (FR)
(72) Inventor: Gouget, Aline, 13705 La Ciotat (FR); Villegas, Karine, 13705 La Ciotat (FR)

(57) **Abstract**

The present invention relates to a method to independently complete the personalization of a token (Tij) based on a secure hardware having the ability to store at least a secret and produced by a production entity (A), this completion of the personalization being performed at a business entity (B) level with a business secret, comprising a preliminary personalization step wherein personalization data (PD) is stored in the token (Tij) by the production entity (A), said token (Tij) being associated with a unique sensitive credential (SCij) recoverable from said personalization data (PD) using an external information (Elj), said external information (Elj) being shared by a batch (j) of tokens (Tij).

## Description

### FIELD OF THE INVENTION

The present invention relates to a method to independently complete the personalization of a token produced by a production entity at a business entity level with a business secret.

The invention concerns indeed the manufacturing and development process of a token or product involving different independent professional stakeholders and up to the ultimate end-user. The invention particularly addresses the case where there is a "personalization phase" of the token/product under the control of an ultimate end-user. Targeted products are typically e.g. embedded cryptography for M2M devices.

In the context of this invention, a token or on-going token means a product based on a secure hardware having the ability to store a secret key.

In the context of this invention, the "access" to a product means either to physically hold the product or only to have a logical remote access.

### BACKGROUND OF THE INVENTION

In the context of the invention, a first stakeholder, denoted by A in the following, has to transfer the management of on-going tokens to a second stakeholder, denoted by B.

The transfer of management can be either a "physical transfer" or a "logical/remote transfer". In both cases, a process for this management transfer is defined. Assume that, for one reason or another, there is a security breach in the process for the management transfer of on-going tokens from A to B. If there is no specific mechanism in the on-going-token to handle this case, anyone that can access to these on-going tokens (although it should not have) can personalize or use the on-going tokens as it sees fit.

Moreover, in the case B is indeed the first to have access to the on-going tokens after the management transfer done by A, then B does not necessarily blindly trust A on how to manage its key. Then B could want to provision its own key on the on-going token with a guarantee of forward security for these new keys.

Depending on the type of stakeholders, several solutions for the first part of the invention (i.e. authentication) can be considered with their advantages and drawbacks. These solutions are developed below.
1. Usage of symmetric key for authentication.
   In that case A has to personalize the symmetric key into each on-going token. The main drawback is that A has to securely transfer the symmetric key to B. In this case, it may be tempting to put the same key in a large number of on-going tokens in order to simplify the transmission of the symmetric key from A to B. However putting the same key in a large number of on-going tokens can pose significant problems in the case this key is compromised.
   To avoid this last problem, one can argue for a set of different symmetric keys, one in each on-going token. But, in that case, in addition to the keys transfer problem between A and B, appears a storage problem of all symmetric keys on A and B sides.
2. Usage of password-based key exchange.
   In that case, the sensitive information is the password. Depending on how the password is transmitted from A to B, e.g. either transmitted using another channel or written on the packaging, the adding-value on the security can be zero.
3. Usage of PKI for authentication.
   2 cases are possible.
   a. The on-going token embeds means for authenticating B. This is not realistic when B is for example an ultimate end-user that buys the token in a shop having an intermediate device for final personalization.
   b. The on-going token embeds a Private/Public key pair to be authenticated by B. In that case, the security of the mechanism relies on the knowledge of the public key. Then, the entity A has to transfer the public key to B in a secure way. There is a priori one public key per on-going token. The management of a large number of public keys that should be securely transmitted is quite complex and costly due to certificates and key/certificates revocations.
4. Usage of Identity-based cryptography for authentication.
   2 cases are also possible here.
   a. Similar as 3.a)
   b. Similar as 3.b) except that the management of "identities" instead of public keys is simpler. However, there is a well-known drawback of identity-based cryptography: the generation of secret keys is under the control of a Key Generator Center. In our context, the key generation is thus under the control of A and the secret key has to be shared at least by the on-going token and the Key Generator Center of A. B does not necessarily trust A. The impact in case of a security breach in the Key Generator Center has to be managed.

Further alternative and advantageous solutions would, accordingly, be desirable in the art.

### SUMMARY OF THE INVENTION

The present invention aims at securely transferring the management of on-going tokens using a crypto-based mechanism and a convenient method for B to be able to securely manage on-going tokens while being able to provision its key, having a guarantee of forward security for its keys. The invention also aims at avoiding both the complexity of the management of symmetric keys and the complexity of the management of public keys that are sensitive in the context of the invention and should be handled in a confidential manner.

The present invention concerns a method to independently complete the personalization of a token based on a secure hardware having the ability to store at least a secret key and produced by a production entity, this completion of the personalization being performed at a business entity level with a business secret, comprising a preliminary personalization step wherein personalization data is stored in the token by the production entity, said token being associated with a unique sensitive credential recoverable from said personalization data using an external information, said external information being shared by a batch of token,
said method further comprising the steps of, for the business entity:
- receiving the token and the external information;
- recovering the unique sensitive credential from personalization data stored on the token using the external information;
- using the unique sensitive credential to bidirectional exchange in a secure way at least one ephemeral data with the token,
- defining a session key based on the exchanged ephemeral data,
personalizing the token with the business secret using a secure channel created with this session key between the token and the business entity.

With such a method, the security for the transfer of the management of a token between 2 independent entities is enhanced. It enables to forward the security of the key provisioning at the business level. The invention does not necessitate any key management related to the transfer management. It is here noted that the business entity can be composed by two sub-entities: a specific device in a shop and the end-user himself that can choose the secret to put in the token while using the specific device.

External information can be diverse as soon as it enables the business entity to know where or how to recover the sensitive credential. The invention offers flexibility in the definition of the external information. It also gives the possibility to offer a great flexibility in the usage, e.g. when there is not yet a secure hardware available at the time of the key provisioning process. For example, it is the case when the production entity produces a component without any memory to store long term key. Then the business entity updates the token and connects it to a secure memory storage.

The invention enables to enhance security in transfer management through unilateral authenticated key exchange for key provisioning.

According to an advantageous implementation, the external information is a way to retrieve personalization data of the token communicated by the production entity to the business entity.

Such external information readable and interpretable by a device of the business entity enables this device to implement a procedure to retrieve personalization data necessary to calculate the sensitive credential.

In one implementation, the external information is a personalization data format.

The knowledge of the format of the personalization data will enable the device of the business level to read the personalization data and to deduce the sensitive credential.

According to a first embodiment, the calculation of the unique sensitive credential is compliant to the Identity Based Encryption (IBE) protocol.

Such an encryption protocol enables to use the properties of the algorithms used in this protocol to exchange ephemeral data between the token and the business entity and to retrieve them.

In a particular implementation of this embodiment, the production entity having a production public/master key couple obtained using domain parameters f the Identity Based Encryption (IBE) protocol and said token comprising said domain parameters and a token private key calculated from the production master key and the unique sensitive credential associated to the token, said public key of the production entity and domain parameters used in the IBE rotocol by the production entity belonging to the external information to recover the unique sensitive credential associated to the token,
the step of using the unique sensitive credential to exchange at least one ephemeral data with the token comprising the sub-steps of, for the business entity:
- generating two numbers k1 and k2,
- computing a first public element using domain parameters from the first number k1 as secret element,
- compute a bridge element from the second number k2, the unique sensitive credential associated to the token and the public key of the production entity,
- sending the two obtained elements to the token,
and, **for the token:**
- using the properties of the IBE protocol to compute k2 from the bridge element, the first public element and the token private key,
- generating a third number k3,
- computing a second public element using domain parameters and the third numberk3,
- sending the second public element to the business entity and a signature calculated on the second public element and the second number k2,
the session key used to create the secure channel being obtained by multiplication of the third number k3 with the first public element, on the token side, and by multiplication of the first number k1 with the second public element, on the business entity side.

This implementation enables to exploit the IBE protocol while not directly relying on it for the transfer management. This protocol is used only for the encrypted exchanges between the token and the business entity.

According to a specific embodiment, several set of parameters of the encryption protocol being available onboard of the token, the method comprises a step of selecting one set of parameters before the step of using the unique sensitive credential to exchange at least one ephemeral data with the token.

This embodiment concerns the cases where the token is personalized with several chains in relation with an encryption protocol. Those chains are susceptible to be used for later use. In this case, the choice of the chain is advantageously given to the business entity.

The invention also relates to a method wherein the production entity determining domain parameters of the PACE protocol and said token comprising said domain parameters, said domain parameters used in the PACE protocol by the production entity belonging to the external information to recover the unique sensitive credential associated to the token,
the step of using the unique sensitive credential to exchange at least one ephemeral data with the token comprises the sub-steps of, for the token:
- generating a nonce,
- encrypting the nonce using the sensitive credential,
- sending the obtained encrypted nonce to the business entity,
and, for the business entity:
- decrypting the nonce using the recovered unique sensitive credential,
the session key used to create the secure channel being obtained after derivation of an ephemeral base followed by a Diffie-Hellman key agreement protocol using this ephemeral base.

This embodiment relates to the use of any forward-secure key agreement protocol, e.g. encrypted key exchange, one-mask Diffie-Hellman key exchange or PACE.

According to a specific embodiment, several set of parameters of the encryption protocol being available onboard of the token, the method comprises a step of selecting one set of parameters before the step of using the unique sensitive credential to exchange at least one ephemeral data with the token.

This embodiment concerns cases where the token is produced with an open configuration including several chains of parameters to be chosen by an end-user.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in details certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents the environment in which the invention is performed;
- Figure 2 diagrammatically shows steps of the invention between the business entity and the token ;
- Figure 3 diagrammatically shows steps of the invention between the business entity and the token according to a first embodiment ; and
- Figure 4 diagrammatically shows steps of the invention between the business entity and the token according to a second embodiment.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described. Moreover, when an action is said to be performed by an entity, it is in fact executed by a device of this entity generally having a microprocessor controlled by instruction codes recorded in a program memory on the said device.

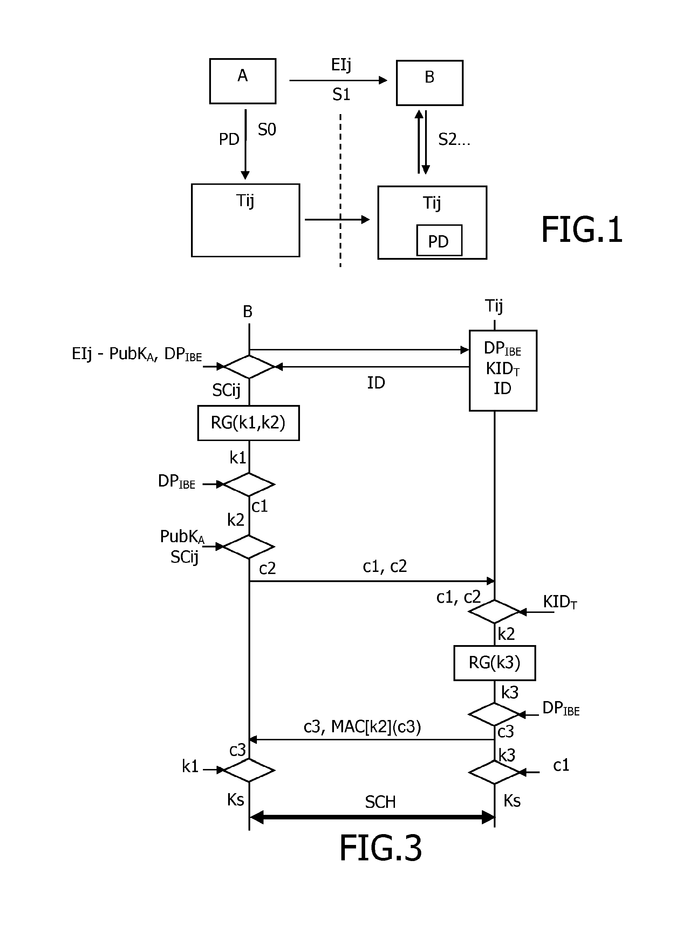

FIG. 1 schematically shows the environment of the invention. Here, a production entity A manufactures the token Tij and, in a first step S0, stores personalization data PD in it. The token Tij comprising the personalization data PD is then physically transferred to a business entity B.

In the context of the invention, the entity A indeed personalises the on-going token with a sensitive credential that can be either a secret IBE key related to the "identity" of the on-going token or a "password". This secret IBE key or this password will be retrievable using the algorithm of the corresponding protocol.

In a step S1, the business entity B receives also external information Elj, this external information Elj being global information concerning a batch j of tokens Tij. This will enable the business entity to retrieve the sensitive credential. It is here noted that the quantity of data to be transmitted from A to B is quite small even if each token has its own secret key.

The external information is advantageously a format of the "identity" or "password". This format is flexible and under the control of A. Part of the "identity/password" is computed by A and by B without the necessity to transfer the value itself. For example, some physical characteristics of the on-going tokens can be included in the format of the "identity" or "password", or an identifier of the batch.

Some physical characteristics can either be valid for a long-term or can depend on the current stage of development of the on-going-token, e.g. SRAM. The advantage of the invention is that the external information, here the format of the "identity" or "password", can easily change over time. It is under the control of A. The sharing of the format enables B to compute itself part of the "identity" or "password" and so, to retrieve the sensitive credential.

Moreover, if part of the external information is sensitive, A can transmit this external information to B using a classical encryption technique and there is only one key to manage.

Then, the business entity B exchanges with the token Tij. These in-house exchanges are independent from the production entity A. They are used by the business entity B to store a business secret in the token Tij.

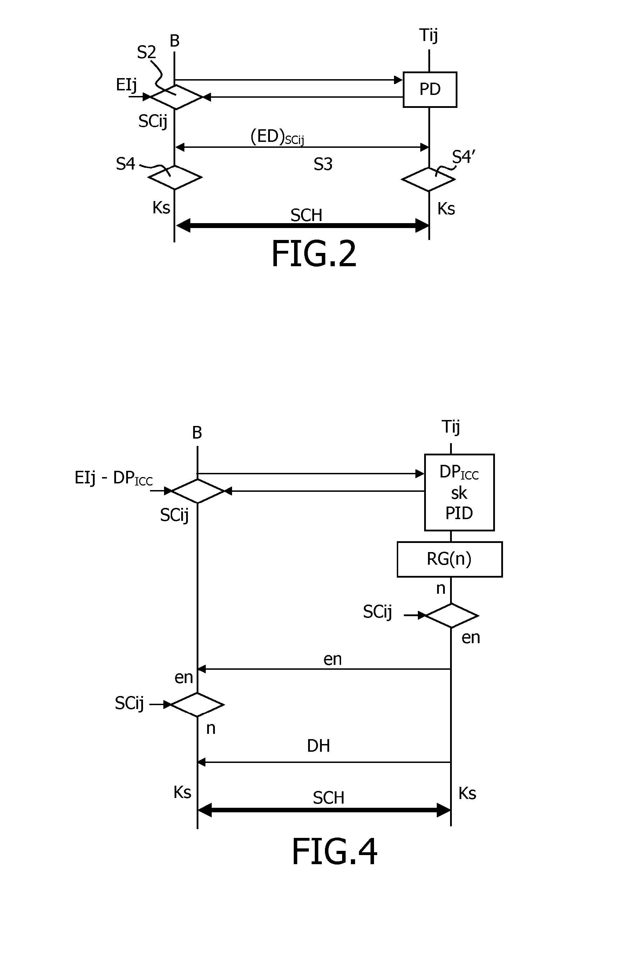

Figure 2 more specifically shows the exchanges between the business entity B and the token Tij. While using the personalization data PD available in the token Tij and the external information Elj, the business entity B recovers a sensitive credential of the token Tij in a step S2.

Then, in a step S3, ephemeral data ED are exchanged in a secure way between the token Tij and the business entity B using the sensitive credential SCij. The knowledge of the sensitive credential SCij by the two parties enables B to authenticate the token and to build a session key Ks in steps S4 and S4'. At last, a secure channel SCH is established between the token and the business entity. It enables to complete the personalization of the token Tij without depending at all on the production entity A and without any permeability towards A.

The invention proposes a way to receive thanks to a secure channel between the on-going token and B, a key from which the on-going token will be able to derive or get a long term key.

The invention thus provides a mechanism for provisioning secret/private keys from business entity using a forward-secure scheme. With the invention, it is possible to achieve the property of forward-security without the requirement to define a key update algorithm while, for example, a key update algorithm is essential for guaranteeing the forward security property in the scheme defined in "Ran Canetti, Shai Halevi, Jonathan Katz: A Forward-Secure Public-Key Encryption Scheme. EUROCRYPT 2003: 255-271". However, in this scheme, within the same period of time, the forward-security property is not guaranteed. In the context of the invention, the forward-security property is guaranteed within a same period of time.

Figure 3 shows a detailed diagram for a first embodiment of the invention.

This embodiment uses a modified IBE protocol. This protocol would be used only once during an initialization phase.

To avoid permanent cost in terms of ROM for the storage of the modified IBE protocol, it will advantageously be loaded temporary.

The production entity A, typically the founder, defines parameters domains DP_{IBE} for the modified IBE protocol comprising a point P. It also has a Private Key Generator enabling to define its master key s and its public key PubK_{A}= [s]P.

Each on-going token, typically a chip, has a unique identifier ID (PUF, SIM ID...). According to each ID, the founder has set in the secure device a corresponding private key KID_{T}=[s]QID with QID being the secure device public key.

The founder loads modified IBE code in the token Tij in an erasable memory, typically a flash memory. It thus comprises domain parameters DP_{IBE}.

Once the on-going token Tij is in the field, the business entity B wants to install a long term private key in it. For that it will need to set a secure channel.

As it has received external information Elj for the batch j of tokens Tij, it can use this external information Elij (here the domain parameter and the way to retrieve ID from the secure device) in a retrieving step after having obtained the ID from the on-going-token Tij.

Thus the business entity B:
a. Computes the on-going token public key QID = H1 (ID) as a sensitive credential SCij with a hash on curve.
b. Get two numbers k1, k2 in Zr according to the notations in IBE protocol using a number generator RG. It is here noted that those numbers can be both random number. It is also possible that one of them is random and the other one is derived from the first one.
c. Compute a first public element c1=[k1].P using the point P from the domain parameters DP_{IBE}.
d. Compute a bridge element c2= k2 XOR H2(g_{ID}^{k1}) with g_{ID}=e(QID, PubK_{A}), e a pairing and H2 a hash function.
e. Send c1 and c2 to the token Tij.

To get the key for the secure channel, the on-going token Tij:
a. Compute g_{ID}^{k1}=e(KID_{T},c1)
   According to the IBE protocol g_{ID}^{k1}= e(QID, PubK_{A})^{k1}= e(QID,[s].P)^{k1}= e(QID,P)^{s.k1} =e([s]QID,[k1]P)= e(KID_{T},c1)
b. Compute h =H2(g_{ID}^{k1})
c. Compute the second number k2= h XOR c2. It is here noted that the bridge element c2 enables to recover the second number k2, which enables the token to have the necessary information to build a common key
d. Get a number k3 in Zr using a number generator RG
e. Compute c3= [k3].P and a signature MAC[k2](c3) which enables to unilaterally authenticate the token.
f. Send c3 to the business entity B with the signature.

A session key Ks is derived from [k1]c3 on the business entity side and from [k3]c1 on the token side.

The on-going token and the entity B then shared a common temporary/ephemeral key Ks.

The operator of the business entity could use it to build a secure channel SCH to load a classical symmetric key or private/public key pair or any data to complete the personalization of the token. At last advantageously the token Tij erases IBE code.

Figure 4 illustrates a second embodiment of the invention based on any forward-secure key agreement protocol, e.g. encrypted key exchange, one-mask Diffie-Hellman key exchange or PACE, that uses a password.

Here the production entity A, typically a founder, defines the parameters domains DP_{ICC}.

Each on-going token Tij, typically a chip, has a unique identifier ID (PUF, SIM ID...). According to each ID, the production entity A sets in the token Tij the identity PID, which constitutes a sensitive credential SCij (typically a password in the PACE case), and a secret key sk. PID is the identity of the chip for authentication under normal circumstances of use and sk is a secret key not necessarily related to the identity PID. In case there are a few successive attempts of authentication that have failed, the token is waiting for an authentication using the secret key sk instead of PID.

Also the founder loads modified PACE code, or a code for another forward-secure key agreement protocol, in the token Tij in an erasable memory (flash).

Once the on-going token Tij is in the field, business entity B wants to install a long term private key in it for that it will need to set a secure channel.

Business entity B has to re-construct or recover the sensitive credential SCij which is the identity/password PID of the token Tij prior to the authentication protocol. The recovering of this sensitive credential SCij is done using the domain parameter DP_{ICC} and data read on the token Tij.

If several chains of parameters have been loaded in the token, at this step, the token, typically a chip, and the business entity using typically a terminal under its control agree on a set of parameters.

The terminal under the control of business entity B then initiates the authentication protocol.

The token Tij randomly and uniformly chooses a nonce 'n' using a random generator RG, then encrypts the nonce 'n' using its password PID as the secret key of a block-cipher. The corresponding ciphertext en is then transmitted to the terminal of the business entity B.

The terminal of the business entity B decrypts the ciphertext using the identity PID as sensitive credential SCij of the token Tij and recovers the value of the nonce n.

It is here noted that a recovery procedure could be launched using sk in case several authentication attempts failed. Such a recovery procedure could use a similar scheme using an encrypted nonce.

Both the token Tij and the terminal of the business entity B derive an ephemeral base for a Diffie-Hellman key agreement protocol DH to come. The ephemeral base is derived from the nonce n and static parameters, e.g. Generic mapping, integrated mapping according to method known from the man skilled in the art. Both the chip and the terminal execute a Diffie-Hellman key agreement protocol DH using the ephemeral base.

Typically the token Tij generates an ephemeral secret value a and it transmits (g')a to the business entity B whereas the business entity B generates an ephemeral secret value b and it transmits (g')b to the token Tij.

Both the token Tij and the business entity compute (g')ab to get the key for a secure channel SCH.

The on-going token and the entity B then shared a common temporary/ephemeral key (g')ab and the operator of the business entity B can use it to load a classical symmetric key, or private/public key pair or any data to complete the personalisation of the token Tij.

At last, here also, the token Tij erases PACE code.

In the context of the invention, the same identity could be used in both a password-based authentication protocol, when performed without the access to a secure element, and in an IBE authentication protocol for key provisioning.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to independently complete the personalization of a token (Tij) based on a secure hardware having the ability to store at least a secret and produced by a production entity (A), this completion of the personalization being performed at a business entity (B) level with a business secret, comprising a preliminary personalization step wherein personalization data (PD) is stored in the token (Tij) by the production entity (A), said token (Tij) being associated with a unique sensitive credential (SCij) recoverable from said personalization data (PD) using an external information (Elj), said external information (Elj) being shared by a batch (j) of tokens (Tij),
said method further comprising the steps of, for the business entity (B):
- receiving the token (Tij) and the external information (Elj);
- recovering the unique sensitive credential (SCij) from personalization data (PD) stored on the token (Tij) using the external information (Elj);
- using the unique sensitive credential (SCij) to bidirectional exchange in a secure way at least one ephemeral data (ED, c1, c2, en) with the token (Tij),
- defining a session key (Ks) based on the exchanged ephemeral data (ED),
- personalizing the token (Tij) with the business secret using a secure channel (SCH) created with this session key (Ks) between the token (Tij) and the business entity (B).

2. Method according to claim 1, wherein the external information (Elj) is a way to retrieve personalization data (PD) of the token (Tij) communicated by the production entity (A) to the business entity (B).

3. Method according to one of preceding claims, wherein the calculation of the unique sensitive credential (SCij) is compliant to the Identity Based Encryption (IBE) protocol.

4. Method according to claim 3, wherein, the production entity (A) having a production public/master key couple obtained using domain parameters (DP_{IBE}) of the IBE protocol and said token (Tij) comprising said domain parameters (DP_{IBE}) and a token private key (KID_{T}) calculated from the production master key and the unique sensitive credential (SCij) associated to the token (Tij), said production public key (PubK_{A}) of the production entity (A) and domain parameters (DP_{IBE}) used in the IBE protocol by the production entity (A) belonging to the external information (Elj) to recover the unique sensitive credential (SCij) associated to the token (Tij),
the step of using the unique sensitive credential (SCij) to exchange at least one ephemeral data (ED) with the token (Tij) comprising the sub-steps of, for the business entity (B):
- generating two numbers (k1 and k2),
- computing a first public element (c1) using domain parameters from the first number (k1) as secret element,
- compute a bridge element (c2) from the second number (k2), the unique sensitive credential (SCij) associated to the token (Tij) and the public key (PubK_{A}) of the production entity (A),
- sending the two obtained elements (c1,c2) to the token (Tij) as ephemeral data,
and, for the token (Tij):
- using the properties of the IBE protocol to compute the second number (k2) from the bridge element (c2), the first public element (c1) and the token private key (KID_{T}),
- generating a third number (k3),
- computing a second public element (c3) using domain parameters (DP_{IBE}) and the third number (k3),
- sending the second public element (c3) to the business entity (B) and a signature (MAC) calculated on the second public element (c3) and the second number (k2),
the session key (Ks) used to create the secure channel (SCH) being obtained by multiplication of the third number (k3) with the first public element (c1) on the token (Tij) side, and by multiplication of the first number (k1) with the second public element (c3) on the business entity (B) side.

5. Method according to one of claims 1 to 3, wherein the calculation of the unique sensitive credential (SCij) is according to the PACE protocol.

6. Method according to claim 5, wherein the production entity (A) determining domain parameters (DP_{ICC}) of the PACE protocol and said token (Tij) comprising said domain parameters (DP_{ICC}), said domain parameters (DP_{ICC}) used in the PACE protocol by the production entity (A) belonging to the external information (Elj) to recover the unique sensitive credential SCij) associated to the token (Tij),
the step of using the unique sensitive credential (SCij) to exchange at least one ephemeral data (ED) with the token (Tij) comprising the sub-steps of, for the token (Tij):
- generating a nonce (en),
- encrypting the nonce (en) using the sensitive credential (SCij),
- sending the obtained encrypted nonce (en) to the business entity (B), and, for the business entity (B):
- decrypting the nonce (en) using the recovered unique sensitive credential (SCij),
the session key (Ks) used to create the secure channel (SCH) being obtained after derivation of an ephemeral base followed by a Diffie-Hellman key agreement protocol using this ephemeral base.

7. Method according to one of the preceding claims, wherein, several set of parameters of the encryption protocol being available onboard of the token (Tij), the method comprises a step of selecting one set of parameters before the step of using the unique sensitive credential (SCij) to exchange at least one ephemeral data (ED) with the token (Tij).
